# EUROPEAN PATENT SPECIFICATION

(11) **EP 2 081 976 B1**
(45) Date of publication and mention of the grant of the patent: **09.11.2011**
(21) Application number: 07837856.9
(22) Date of filing: 06.09.2007
(51) Int. Cl.: C08G 65/12, C08G 65/26, B01J 31/14, B01J 31/02, B01J 31/12

(54) **POLYOXIRANES, PROCESS AND CATALYSTS FOR MAKING THEM**
POLYOXIRANE, VERFAHREN UND KATALYSATOR ZU IHRER HERSTELLUNG
POLYOXIRANE, PROCÉDÉ ET CATALYSEURS POUR LEUR FABRICATION

(30) Priority: 13.10.2006 US 851669 P
(43) Date of publication of application: 29.07.2009
(73) Proprietor: Dow Global Technologies LLC, Midland, MI 48674 (US)
(72) Inventor: WASSERMAN, Eric P., Hopewell NJ 08525 (US); GALLEY, Richard A., Belle Mead NJ 08502 (US); SONG, Woo Min, High Bridge NJ 08829 (US); GHOSH-DASTIDAR, Abhijit, East Brunswick NJ 08816 (US)
(74) Representative: Raynor, John
(86) International application number: PCT/US2007/019499
(87) International publication number: WO 2008/048399

(56) References cited:
- DE-A1- 1 520 055
- FR-A- 2 691 380
- US-A- 3 186 958
- US-A- 3 657 149

## Description

### BACKGROUND OF THE INVENTION

### Field of the Invention

The invention relates to catalyst compositions for polymerizing oxiranes, to oxirane polymerization methods, and to poly(oxiranes).

### Description of Related Art

Poly(oxirancs) (or poly(alkylene oxides)) are well known and useful in a number of applications such as detergent and cleaner compositions, oil well drilling fluids, inks, metal working fluids, lubricants in paper coating compositions, ceramics manufacturing, chemical intermediates for nonionic surfactants which in turn are used in cosmetics, textiles and chemical processing, polyurethanes which are used as flexible foams and elastomers, chemical intermediates for esters which are used in textile spin finishes, cosmetic agents, and as foam control agents for a wide variety of processes, and many other applications.

A wide variety of catalysts have been described for the polymerization of alkylene oxides. Metal-based catalysts are the most common ones. Examples include oxides, and/or hydroxides of iron, magnesium, aluminum, and zinc, ammonia-modified amides of calcium, and bimetallic cyanides of zinc and cobalt. Most of these catalysts suffer from several disadvantages including ability to attain only relatively low molecular weight and inadequate molecular weight control.

Aluminum-based catalysts have been known and used for many years. U.S. Patent 3,186,958, one of the original publications in this area, describes the formation of poly(alkylene oxides) using an aluminum trialkyl compound and Lewis base co-catalyst. Variations on this catalyst system have been subsequently developed.

Cazacu et al., J. Polym. Sci., Part A: Polymer Chemistry (2004), 42(15), 3720-3728, describes the use of haloalkylsiloxanes as a way of linking preformed amine-group-bearing poly(ethylene glycol) chains together.

EP794230 describes the use of a copolymer of ethylene oxide containing silicone groups in the production of higher-MW compositions upon reaction with epoxy resins.

GB1541659 describes the use of a hydroxyl-terminated polysiloxane as a MW enhancing agent for low-MW poly(ethylene oxide)s through condensation reaction (chain extension) of a polymer.

U.S. Patent 3,158,580 describes the use of diamines as crosslinking agents for poly(epihalohydrin)s. Untreated silica is used as a filler material along with carbon black.

JP38024598 describes the polymerization of ethylene oxide in the presence of silicone oil as a method for controlling polymer particle morphology.

Many applications for poly(alkylene oxides) require polymers of high molecular weight (between 200,000 and 10,000,000). It remains a goal in the art, therefore, to find catalyst systems and processes capable of providing high molecular weight poly(alkylene oxides) efficiently and without significant loss of catalyst productivity.

### BRIEF SUMMARY OF THE INVENTION

In one aspect, the invention provides a catalyst composition useful for polymerizing oxiranes (epoxides). The composition comprises: a hydrophobically modified particulate inorganic oxide; an aluminum alkyl complex; and a compound containing a Lewis basic free electron pair.

In another aspect, the invention provides an oxirane polymerization process comprising: reacting an oxirane containing compound with itself, or with itself and with other oxiranes, in the presence of the catalyst composition described herein.

In a further aspect, the invention provides poly(oxiranes) prepared by the processes described herein.

### DETAILED DESCRIPTION OF THE INVENTION

As noted above, in one aspect the invention provides a catalyst composition for polymerizing oxiranes. The catalyst composition of the invention has been found to surprisingly impart high molecular weight to poly(alkylene) oxide homo- and co-polymers. By using the catalyst systems of the invention, it is now possible to target poly(alkylene) oxides of specifically desired molecular weights.

The composition of the invention comprises a hydrophobically modified particulate inorganic oxide, an aluminum alkyl complex, and a compound containing a Lewis basic free electron pair.

The hydrophobically modified particulate inorganic oxide is an inorganic oxide material that is functionalized with one or more hydrophobic groups. The inorganic oxide is preferably finely divided, and advantageously has a surface area of 50 m²/g or greater (B.E.T. surface area). Examples of suitable inorganic oxides include silica, alumina, titania, zirconia, and aluminosilicates. Preferred is silica, including fumed silica, precipitated silica, silica xerogel, and silica aerogel. Particularly preferred is fumed silica. The catalyst composition of the invention contains at least about 25 g, more preferably at least about 50 g, and even more preferably at least about 100 g of hydrophobically modified inorganic oxide per mole of aluminum alkyl complex. The catalyst composition preferably contains up to about 5000 g, more preferably up to about 4000 g, and even more preferably up to about 3000 g of hydrophobically modified inorganic oxide per mole of aluminum alkyl complex. In further embodiments, the catalyst composition preferably contains between about 100 g and 1000 g, more preferably between about 250 g and 750 g, and even more preferably between about 400 g and 600 g of hydrophobically modified inorganic oxide per mole of aluminum alkyl complex.

The inorganic oxide is functionalized with one or more hydrophobic groups. Any suitable reagent can be used for forming the hydrophobic groups including, for example, organosilazanes, such as hexamethyldisilazane (HMDZ), organosiloxanes such as hexamethyldisiloxane (HMDS), organohalosilanes such as trimethylchlorosilane (TMCS), or alkoxysilanes such as dimethoxydimethylsilane. Preferably, the hydrophobic groups formed on the inorganic oxide are organosiloxanes. The hydrophobic groups are preferably bound to the inorganic oxide through oxygen atoms. Methods for functionalizing inorganic oxides with hydrophic groups, particularly silica, are described in U.S. Patent 6,344,240, which is incorporated herein by reference.

Preferred hydrophobic groups include monofunctional moieties of the formula (I):

-(SiR₂O)ₙSiR₃ (I)

wherein n is 0 to 20 and R at each occurrence is independently H, Ç₁-C₂₀ alkyl, aryl, or arylalkyl group. Preferably, n is 0 to 10, more preferably 0-6. R is preferably independently at each occurrence C₁-C₈ alkyl, more preferably C₁-C₆ alkyl, even more preferably C₁-C₃ alkyl. Even more preferably, R is methyl at all occurrences.

Preferred hydrophobic groups also include difunctional moieties of the formula (II):

-(SiR₂O)ₙSiR₂- (II)

wherein n is 0 to 20 and R at each occurrence is independently H or C₁-C₈ alkyl. Preferably, n is 0 to 10, more preferably 0-6. R is preferably independently at each occurrence C₁-C₆ alkyl, more preferably C₁-C₃ alkyl. Even more preferably, R is methyl at all occurrences.

The total content of hydrophobic groups on the inorganic oxide is preferably at least about 0.001 mmol, more preferably at least about 0.01 mmol, even more preferably at least about 0.1 mmol per gram of inorganic oxide, and preferably up to about 20 mmol, more preferably up to about 10 mmol, still more preferably up to about 5 mmol, and even more preferably up to about 1 mmol per gram of inorganic oxide.

Particularly preferred hydrophobically functionalized inorganic oxides are the CAB-O-SIL® TS-530, 610, and 720 treated fumed silica products available from Cabot Corporation, Billerica, Massachusetts. CAB-O-SIL® TS-530 is a treated fumed silica functionalized with trimethylsiloxane hydrophobic groups: 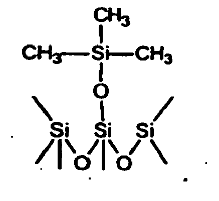 The material has a B.E.T. surface area of 205-245 m²/g and an average particle size of 0.2-0.3 microns.

CAB-O-SIL® TS-61 0 is a treated fumed silica functionalized with tetramethyldisiloxane hydrophobic groups: 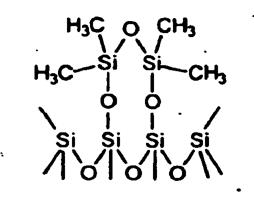 The material has a B.E.T. surface area of 105-145 m²/g and an average particle size of 0.2-0.3 microns.

CAB-O-SIL® TS-720 is a treated fumed silica functionalized with a polydimethylsiloxane polymer: 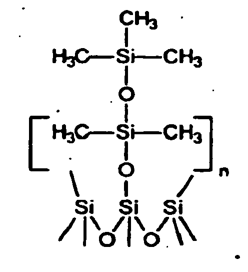 The material has a B.E.T. surface area of 105-130 m²/g and an average particle size of 0.2-0.3 microns.

Optionally, the catalyst composition may also contain inorganic oxide that is not hydrophobically modified.

The aluminum alkyl complex of the catalyst composition can be any such material that, when combined with a Lewis base, results in the polymerization of oxiranes. Such complexes are described, for instance, in U.S. Patents 3,219,591; 3,642,667; 3,580,938 and 3,186,958, each of which is incorporated herein by reference.

A preferred aluminum complex is of the formula (III):

AIR²R³ₓ(OR⁴)₍₂₋ₓ₎ (III)

wherein R² and R³ are each independently hydrogen or C₁-C₈ alkyl; R⁴ is a C₁₋₂₀ alkyl (preferably C₁-C₁₀ alkyl, more preferably C₁-C₆ alkyl) or aryl group, and x is an integer taken from 0, 1, and 2. Preferably, the aluminum complex of formula (III) is triisobutylaluminum. Examples of other suitable compounds of formula (III) are triethylaluminum, trimethylaluminum, tri-n-propylaluminum, tri-n-butylaluminum, diethylaluminum hydride, dipropylaluminum hydride, diisobutyl aluminum hydride, diethyl ethoxy aluminum, diisobutyl ethoxy aluminum and mixtures thereof. The content of aluminum alkyl complex in the composition of the invention is preferably between 0.01 to about 50 mmol, more preferably 0.3 to 10 mmol, per gram of inorganic oxide.

The compound containing a Lewis basic free electron pair may be any such compound that, when combined with an aluminum alkyl complex, results in the polymerization of oxirane.

A preferred Lewis base for use in the invention is a compound of formula (IV):

ER⁵R⁶R⁷ (IV)

wherein E is a N or P atom, and R⁵**,** R⁶**,** and R⁷ are each independently hydrogen, C₁₋₂₀ alkyl (preferably C₁-C₈ alkyl, more preferably C₁-C₆ alkyl, or even more preferably C₁-C₃ alkyl), or aryl (preferably phenyl), or two or three groups from among R⁵, R⁶, and R⁷ are linked to form a cyclic amine or phosphine. Examples of suitable bases of formula (IV) include mono-, di- and tri-alkylamines, alkylphosphines, arylamines and arylphosphines. Preferably, the Lewis base is triethylamine. The molar ratio of aluminum alkyl complex relative to Lewis base present in the composition of the invention is preferably between 0.1 to 100, more preferably 1 to 10.

The catalyst composition of the invention is useful for the homo- and co-polymerization of a wide variety of oxiranes to high molecular weight polymers. Nonlimiting examples of suitable oxiranes include: alkylene oxides, cyclic alkylene oxides, substituted alkylene oxides, glycidyl ethers, glycidyl amines, glycidyl acrylates, methacrylates, and glycidyl alkylsilanes. Particularly exemplary are ethylene oxide, propylene oxide, 1,2-cyclohexene epoxide, 1,2-butylene oxide, isobutylene epoxide, epichlorohydrin, epibromohydrin, vinylchloride epoxide, tertiary butyl glycidyl ether, methyl glycidyl ether, n-octyl glycidyl ether, phenyl glycidyl ether, alkylphenyl glycidyl ether, etc., as well as mixtures of oxiranes. Most preferred are the alkylene oxides, including ethylene oxide and propylene oxide, as well as epichlorohydrin. Random copolymers may be produced from the polymerization of mixtures of at least two oxiranes. Block copolymers may be produced from the sequential addition of more than one oxirane, in which nearly total consumption of each oxirane monomer takes place prior to the addition of subsequent monomer(s).

The reactants can be combined in any sequence, however, in order to provide the most effective catalyst, all the components of the catalyst composition should be completely added into the reactor prior to the termination of addition of the monomer oxirane(s). A preferred reaction sequence involves placing the catalyst composition in a reaction vessel containing a diluent, and then adding one or more oxiranes at a controlled rate so that the heat of reaction does not lead to an unsafe operating condition. All additions are preferably accomplished with vigorous stirring over a sufficiently long period of time to prevent localized overheating of the reaction mixture.

The catalyst compositions of the invention can be used in conjunction with other compositions and techniques already known for enhancing product molecular weight. For example, it is known that in aluminum complex/Lewis base catalyst systems, the product molecular weight can be enhanced by (1) using high molar ratios of aluminum compound to nitrogen atom; and/or (2) the use of less-substituted amines such as diethylamine or n-butylamine in place of triethylamine. Thus, by using the catalyst composition of the invention together with the foregoing already known enhancement techniques, the product molecular weight can be even further increased. It should be noted that, unlike the previously known molecular weight enhancement techniques, the inventive compositions provide molecular weight enhancement without cost to the catalyst's productivity.

Polymerization of one or more monomers and optional other additives may be performed in the gas phase, solution phase, or in a slurry, generally at pressures from 0.1 to 1000 bar, more preferably from 1 to 100 bar, most preferably from 1 to 15 bar. The polymerization temperature generally ranges from -40°C to 200°C, although it is highly recommended that the reaction temperature be kept as low as economically practical to avoid spontaneous or runaway polymerization. Preferably, the polymerization is performed at a temperature of from 0°C to 100°C, more preferably from 10°C to 60°C. It is preferred that at least about 0.1 %, more preferably at least about 1 % and even more preferably at least about 3 %, and up to about 10 %, more preferably up to about 8 %, and even more preferably up to about 6 % by weight of the catalyst composition is used relative to the product polyalkylene oxide product, in a typical polymerization process.

Preferably, the polymerization is conducted in a slurry of a hydrocarbon. Aromatic hydrocarbons are also useful, such as benzene, toluene, xylene, or ethylbenzene. Preferably, the polymerization is conducted in a slurry of an aliphatic hydrocarbon, preferably a saturated aliphatic or saturated cycloaliphatic hydrocarbon, such as a butane, a pentane, a hexane, a heptane, a decane, cyclopentane, cyclohexane, or methylcyclohexane. Alternatively, the polymerization can be conducted in an ether, such as diethyl ether or tetrahydrofuran.

The oxirane as well as any solvent or inert gas should generally be thoroughly dried and depxygenated prior to use.

One may use a chain-transfer agent to reduce the molecular weight of the resultant polymer. Typically the chain transfer agent is a protic reagent such as an alcohol, for example *n*-butanol, but large ratios of alcohol to aluminum may destroy catalytic activity for the polymerization.

According to the polymerization process of the present invention an alkylene oxide homopolymer or copolymer is produced which generally has a weight average molecular weight of from 1,000 to 10⁷, preferably from 10,000 to 10⁷, more preferably from 20,000 to 8,000,000. The resulting polymers are generally white. By using the catalyst of the present invention, alkylene oxide homopolymers and copolymers with the desired molecular weight can be achieved with efficiencies which are comparable to known alkylene oxide catalysts.

The alkylene oxide homopolymers and copolymers can be recovered from the polymerization through known methods. These methods include precipitation of polymer through the addition of a poor solvent, followed by filtration and devolatilization, optionally at elevated temperature and reduced pressure. If catalyst residues are present in high concentration in the final composition, it may be useful to quench these residues through controlled hydrolysis to prevent the residues from adversely affecting polymer performance. It is often advantageous to add one or more additives to the polymer at some point in its recovery. Such additives may confer improved resistance to oxidative, photolytic, or thermal degradation or may improve the appearance of the final product by preventing discoloration or by enhancing diffuse light reflectance.

As used herein, "alkyl" refers to straight or branched chain alkyl groups having the indicated number of carbon atoms, such as, methyl, ethyl, propyl, isopropyl, n-butyl, sec-butyl, tert-butyl, pentyl, 2-pentyl, isopentyl, neopentyl, hexyl, 2-hexyl, 3-hexyl, and 3-methylpentyl. Where the number of carbon atoms is not specifically indicated, alkyl contains 1-20 carbon atoms, more preferably 1-10 and even more preferably, 1-6.

By "aryl" is meant an aromatic carbocyclic group having a single ring (e.g., phenyl), multiple rings (e.g., biphenyl), or multiple condensed rings in which at least one is aromatic, (e.g., 1,2,3,4-tetrahydronaphthyl, naphthyl). Preferred aryl groups of the present invention are phenyl, 1-naphthyl, 2-naphthyl, indanyl, indenyl, dihydronaphthyl, tetralinyl or 6,7,8,9-tetrahydro-5H-benzo[a]cyaoheptenyl.

The present invention is further illustrated by the following examples which should not be construed to limit the scope of the present invention. All parts and percentages are by weight unless otherwise indicated.

### Examples

Example 1: A pressure-rated vessel comprised of glass and stainless-steel components, a thermocouple, a steel baffle and a steel agitator, with condenser and automated electronic venting system, was purged with nitrogen while heated to 69°C for several hours: The reactor was then cooled to 38.5°C, and charged with 420 g dry isopentane, 1.7 g propylene oxide. A vial containing 3.3 g siloxane-functionalized fumed silica (Cab-O-Sil TS-720), which had been dried overnight at about 170-190°C and 50 mL hexane was agitated to suspend the solid, and then the contents were transferred to the reactor via a syringe. Next, 6.6 mL of a solution of triisobutylaluminum in hexane (1.0, mol/L) were injected into the reactor via syringe, followed by 0.22 g triethylamine (Al: N = 3). Ethylene oxide was fed at a rate of 26.4 g/h and propylene oxide was fed at 2.6 g/h while maintaining the temperature at 38.5°C and the pressure in the range of 7-10 psig When 71 g ethylene oxide had been fed, the feed of both monomers was terminated; isopropanol (1.6 g) was injected via syringe and the reaction mixture stirred for 0.5 h. The reaction mixture was then allowed to cool to room temperature and the contents removed, filtered, washed with hexane and dried in a vacuum oven overnight at room temperature. The polymer was stabilized with 2000 ppm 2,6-t-butyl-4-methylphenol (BHT). The yield of white powder was 83.2 g (100%). The reduced viscosity of the material, determined by capillary rheometry of a 0.2 wt % aqueous solution, was 2.72, giving an estimated MW of 495,000. The melting point of the polymer was determined by differential scanning calorimetry to be 43.9°C on second heat.

Example 2. The procedure of Example 1 was repeated, except that the feed of monomers was stopped when a total of 67 g ethylene oxide had been fed. The yield of copolymer was 75 g (95%). The MW as determined by reduced viscosity was 462,000.

Example 3. The procedure of Example 1 was repeated, except that 3.3 g of a mixture of siloxane-functionalized fumed silica (Cab-O-Sil TS-720, 50 wt %) and unfunctionalized fumed silica (Cab-O-Sil M-5, 50 wt %) was used as the particulate solid additive. The mixture had been dried in a vacuum oven overnight at 170°C. The flow of monomers was terminated after 70g of ethylene, oxide had been fed. The yield of copolymer was 83.7 g (~100 %). MW as determined by reduced viscosity was 320,000.

Example 4. The procedure of Example 1 was repeated, except that 3.3 g of a mixture of siloxane-functionalized fumed silica (Cab-O-Sil TS-720, 25 wt %) and unfunctionalized fumed silica (Cab-O-Sil M-5, 75 wt %) was used as the particulate solid additive. The mixture had been dried in a vacuum oven overnight at 170°C. The flow of monomers was terminated after 70g of ethylene oxide had been fed. The yield of copolymer was 84 g (~100 %). MW as determined by reduced viscosity was 291,000.

Example 5. The procedure of Example 1 was repeated, except that 3.3 g of a mixture of siloxane-functionalized fumed silica (Cab-O-Sil TS-720, 75 wt %) and unfunctionalized fumed silica (Cab-O-Sil M-5, 25 wt %) was used as the particulate solid additive. The mixture had been dried in a vacuum oven overnight at 170°C. The flow of monomers was terminated after 70g of ethylene oxide had been fed. The yield of copolymer was 83 g (∼100 %). MW as determined by reduced viscosity was 344,000.

Comparative Example 1. The reaction described in Example 1 was repeated using 3.3 grams of untreated Cab-O-Sil M-5 fumed silica in place of the treated Cab-O-Sil TS-720 fumed silica. The yield of white powder was 90 (96%). The MW as determined by reduced viscosity was 249,000. The melting point of the polymer was 48.8°C on second heat.

Comparative Example 2. The procedure of Comparative Example 1 was repeated, except that the feed of monomers was stopped when a total of 74 g ethylene oxide had been fed. The yield of copolymer was 86 g (100%). The MW as determined by reduced viscosity was 244,000. The polymer melted at 42.3°C.

Comparative Example 3. The procedure of Comparative Example 1 was repeated and the feed of monomers was stopped when a total of 70 g ethylene oxide had been fed. The yield of copolymer was 80 g (98%). The MW as determined by reduced viscosity was 217,000. The polymer melted at 42.6°C.

## Claims

1. A catalyst composition for polymerizing an epoxide, the composition comprising:
a hydrophobically modified particulate inorganic oxide;
an aluminum alkyl complex; and
a compound containing a Lewis basic free electron pair,
wherein the hydrophobically modified particulate inorganic oxide comprises an inorganic oxide functionalized with monofunctional groups of the formula -(SiR₂O)ₙSiR₃, difunctional groups of the formula -(SiR₂O)ₙSiR₂-, or mixtures thereof, wherein n at each occurrence is independently 0 to 20, R is independently H or C₁-C₈ alkyl, and wherein each monofunctional and difunctional group is bound to the inorganic oxide through one or more oxygen atoms.

2. The catalyst composition of claim 1 wherein the hydrophobically modified particulate inorganic oxide is finely divided and has an average surface area of 50 m²/g or greater.

3. The catalyst composition of any one of claims 1 to 2 comprising about 0.001 to about 20 mmol of hydrophobic groups per gram of inorganic oxide.

4. The catalyst composition of any one of claims 1 to 3 comprising about 0.01 to about 50 mmol of aluminum alkyl complex per gram of inorganic oxide.

5. The catalyst composition of any one of claims 1 to 4 wherein the molar ratio of the aluminum alkyl complex to the compound containing a Lewis basic free electron pair is about 0.1 to about 100.

6. The catalyst composition of any one of claims 1 to 5 wherein the aluminium alkyl complex is of the formula AlR²R³ₓ(OR⁴)₍₂₋ₓ₎, wherein R² and R³ are independently hydrogen or C₁-C₈ alkyl, R⁴ is C₁-C₂₀ alkyl or aryl, and x is 0, 1, or 2.

7. The catalyst composition of any one of claims 1 to 6 wherein the compound containing a Lewis basic free electron pair is of the formula ER⁵R⁶R⁷, wherein E is a nitrogen or phosphorus atom and R⁵. R⁶, and R⁷ are each independently H, C₁-C₂₀ alkyl, aryl, or two or three of R⁵, R⁶ and R⁷ and are linked to form a cyclic amine or phosphine with the E group.

8. An oxirane polymerization process comprising: reacting an oxirane containing compound with itself, or with itself and with other oxiranes, in the presence of the catalyst composition of any one of claims 1 to 7.

9. The process of claim 8 wherein the reaction is conducted in a diluent

10. The process of claim 8 or 9 wherein the oxirane containing compound is selected from the group consisting of ethylene oxide, propylene oxide, epichlorohydrin, and mixtures thereof.

## Patentansprüche

1. Katalysatorzusammensetzung zur Polymerisation eines Epoxids, wobei die Zusammensetzung enthält:
ein hydrophob modifiziertes partikuläres anorganisches Oxid;
einen Aluminiumalkylkomplex und
eine Verbindung, die ein Lewis-basisches freies Elektronenpaar aufweist,
wobei das hydrophob modifizierte partikuläre anorganische Oxid ein anorganisches Oxid enthält, das mit monofunktionellen Gruppen der Formel -(SiR₂O)ₙSiR₃, difunktionellen Gruppen der Formel -(SiR₂O)ₙSiR₂- oder Mischungen davon funktionalisiert ist, worin n bei jedem Auftreten unabhängig voneinander 0 bis 20 ist, R unabhängig voneinander H oder C₁-C₈-Alkyl ist und wobei jede monofunktionelle und difunktionelle Gruppe an das anorganische Oxid über ein oder mehrere Sauerstoffatome gebunden ist.

2. Katalysatorzusammensetzung nach Anspruch 1, wobei das hydrophob modifizierte partikuläre anorganische Oxid fein verteilt ist und eine mittlere Oberfläche von 50 m²/g oder größter aufweist.

3. Katalysatorzusammensetzung nach einem der Ansprüche 1 bis 2, die etwa 0,001 bis etwa 20 mmol hydrophobe Gruppen pro Gramm anorganisches Oxid enthält.

4. Katalysatorzusammensetzung nach einem der Ansprüche 1 bis 3, die etwa 0,01 bis etwa 50 mmol Aluminiumalkylkomplex pro Gramm anorganisches Oxid enthält.

5. Katalysatorzusammensetzung nach einem der Ansprüche 1 bis 4, wobei das Molverhältnis des Aluminiumaikyikomplexes zu der Verbindung, die ein Lewis-basisches freies Elektronenpaar aufweist, etwa 0,1 bis etwa 100 beträgt.

6. Katalysatorzusammensetzung nach einem der Ansprüche 1 bis 5, wobei der Aluminiumalkylkomplex die Formel AlR²R³ₓ(OR⁴)₍₂₋ₓ₎ hat, worin R² und R³ unabhängig voneinander Wasserstoff oder C₁-C₈-Alkyl sind, R⁴ gleich C₁-C₂₀-Alkyl oder Aryl ist und x gleich 0, 1 oder 2 ist.

7. Katalysatorzusammensetzung nach einem der Ansprüche 1 bis 6, wobei die Verbindung, die ein Lewis-basisches freies Elektronenpaar aufweist, die Formel ER⁶R⁶R⁷ hat, worin E ein Stickstoff- oder Phosphoratom ist und R⁵, R⁶ und R⁷ unabhängig voneinander H, C₁-C₂₀-Alkyl. Aryl sind oder zwei oder drei von R⁵, F⁶ und R⁷ miteinander verbunden sind, um ein cyclisches Amin oder Phosphin mit der E-Gruppe zu bilden.

8. Oxiranpolymerisationsverfahren umfassend: Umsetzen einer oxiranhaltigen Verbindung mit sich selbst oder mit sich selbst und mit anderen Oxiranen in Gegenwart der Katalysatorzusammensetzung nach einem der Ansprüche 1 bis 7.

9. Verfahren nach Anspruch 8, wobei die Reaktion in einem Verdünnungsmittel durchgeführt wird.

10. Verfahren nach Anspruch 8 oder 9, wobei die oxiranhaltige Verbindung ausgewählt ist aus der Gruppe bestehend aus Ethylenoxid, Propylenoxid, Epichlorhydrin und Mischungen daraus.

## Revendications

1. Composition de catalyseur pour polymérisation d'époxyde, laquelle composition comprend :
- un oxyde inorganique en particules, qu'on a modifié de manière à le rendre hydrophobe,
- un complexe de type alkyl-aluminium,
- et un composé comportant un doublet libre d'électrons, qui en fait une base de Lewis,
et dans laquelle composition l'oxyde inorganique en particules modifié hydrophobe comprend un oxyde inorganique fonctionnalisé au moyen de groupes monovalents de formule -(SiOR₂)ₙSiR₃ ou de groupes divalents de formule -(SiOR₂)ₙSiR₂-, ou de mélanges de tels groupes, dans lesquelles formules l'indice n vaut, indépendamment en chaque occurrence, de 0 à 20 et les symboles R représentent chacun, indépendamment, un atome d'hydrogène ou un groupe alkyle en C₁₋₈, et chacun de ces groupes monovalents et divalents est lié à l'oxyde inorganique par l'intermédiaire d'un ou de plusieurs atome(s) d'oxygène.

2. Composition de catalyseur conforme à la revendication 1, dans laquelle l'oxyde inorganique en particules modifié hydrophobe se trouve dans un état finement divisé et présente une aire spécifique moyenne de 50 m²/g ou plus.

3. Composition de catalyseur conforme à l'une des revendications 1 et 2, qui contient d'environ 0,001 à environ 20 millimoles de groupes hydrophobes par gramme d'oxyde inorganique.

4. Composition de catalyseur conforme à l'une des revendications 1 à 3, qui contient d'environ 0,01 à environ 50 millimoles de complexe alkyl-aluminium par gramme d'oxyde inorganique.

5. Composition de catalyseur conforme à l'une des revendications 1 à 4, dans laquelle le rapport molaire du complexe alkyl-aluminium au composé comportant un doublet libre d'électrons (base de Lewis) vaut d'environ 0,1 à environ 100.

6. Composition de catalyseur conforme à l'une des revendications 1 à 5, dans laquelle le complexe alkyl-aluminium est un composé de formule AlR²R³ₓ(OR⁴)₂₋ₓ dans laquelle R² et R³ représentent chacun, indépendamment, un atome d'hydrogène ou un groupe alkyle en C₁₋₈, R⁴ représente un groupe alkyle en C₁₋₂₀ ou un groupe aryle, et l'indice x vaut 0, 1 ou 2.

7. Composition de catalyseur conforme à l'une des revendications 1 à 6, dans laquelle le composé comportant un doublet libre d'électrons (base de Lewis) est un composé de formule ER⁵R⁶R⁷ dans laquelle E représente un atome d'azote ou de phosphore et R⁵, R⁶ et R⁷ représentent chacun, indépendamment, un atome d'hydrogène, un groupe alkyle en C₁₋₂₀ ou un groupe aryle, ou deux ou trois des symboles R⁵, R⁶ et R⁷ représentent des entités qui sont raccordées de manière à former, avec l'atome représenté par E, une amine cyclique ou une phosphine cyclique.

8. Procédé de polymérisation d'oxirane, comportant le fait de faire réagir avec lui-même un composé contenant un cycle oxirane, ou de le faire réagir avec lui-même et avec d'autres oxiranes, en présence d'une composition de catalyseur conforme à l'une des revendications 1 à 7.

9. Procédé conforme à la revendication 8, dans lequel la réaction est effectuée dans un diluant.

10. Procédé conforme à la revendication 8 ou 9, pour lequel le composé contenant un cycle oxirane est choisi dans l'ensemble formé par l'oxyde d'éthylène, l'oxyde de propylène et l'épichlorhydrine, ainsi que leurs mélanges.
